# EUROPÄISCHE PATENTSCHRIFT

(11) **EP 0 852 707 B1**
(45) Veröffentlichungstag und Bekanntmachung des Hinweises auf die Patenterteilung: **08.01.2003**
(21) Anmeldenummer: 97922920.0
(22) Anmeldetag: 29.04.1997
(51) Int. Cl.: G01G 19/393, B65G 27/08

(54) **KOMBINATIONSWAAGE**
COMBINATION SCALE
BALANCE COMBINEE

(30) Priorität: 03.05.1996 DE 19617821
(43) Veröffentlichungstag der Anmeldung: 15.07.1998
(73) Patentinhaber: MULTIPOND WÄGETECHNIK GMBH, 84478 Waldkraiburg (DE)
(72) Erfinder: WECK, Josef, D-83555 Gars-Bahnhof/Haiden (DE)
(74) Vertreter: Prüfer, Lutz H., Dipl.-Phys.
(86) Internationale Anmeldenummer: EP9702205
(87) Internationale Veröffentlichungsnummer: WO97042472

(56) Entgegenhaltungen:
- EP-A- 0 577 851
- WO-A-93/15003
- DE-A- 4 234 170
- US-A- 4 700 827

## Beschreibung

Die vorliegende Erfindung betrifft eine Kombinationswaage.

Bei Kombinationswaagen werden die zu wiegenden Produkte von einer Verteilvorrichtung verteilt und über Vibrationsrinnen, die durch elektromagnetische Antriebseinrichtungen in Schwingung versetzt werden, den einzelnen Wägebehältern zugeführt. Bei solchen Kombinationswaagen ist es erforderlich, daß die Vibrationsrinne zu Reinigungszwecken leicht ausbaubar ist.

Die EP 0 677 460 A2 beschreibt eine Kombinationswaage, bei der an der Vibrationsrinne ein erster zylinderförmiger Flansch befestigt ist. Die Antriebseinrichtung ist weist einen zweiten zylinderförmigen Flansch auf. Die beiden Flansche werden durch eine kreisförmige Klammer miteinander verbunden.

Aus der US 4,702,394 ist eine Kombinationswaage bekannt, bei der die Vibrationsrinnen jeweils mit den Vibrationsmotoren verschraubt sind. Die Vibrationsmotoren sind jeweils federnd mit einer Basisplatte verbunden. Jede Basisplatte weist ein Langloch mit einem ersten Abschnitt, einen daran anschließenden zweiten Abschnitt, einen daran anschließenden dritten Abschnitt und einen daran anschließenden vierten Abschnitt auf. Der erste und der dritte Abschnit sind kleiner als ein Kopf eines Verbindungsstiftes und der zweite und vierte Abschnitt sind größer als der Kopf des Verbindungsstiftes. Auf einem Tisch sind für jede Basisplatte zwei Verbindungsstifte in einem Abstand voneinander angeordnet. Die Basisplatte wird so auf den Tisch aufgesetzt, daß sich die beiden Verbindungsstifte durch den zweiten bzw. vierten Bereich hindurch erstrecken. Zur Herstellung der Verbindung zwischen Basisplatte und Tisch wird die Basisplatte so verschoben, daß die Schäfte der beiden Verbindungsstifte jeweils mit dem ersten und dritten Bereich in Eingriff sind.

Aufgabe der Erfindung ist, eine Kombinationswaage mit einer Verbindungseinrichtung zum lösbaren Verbinden der Vibrationsrinne mit der Antriebseinrichtung zur Verfügung zu stellen, die eine verbesserte und einfach zu bedienende Verbindung zwischen Vibrationsrinne und Antriebseinrichtung gewährleistet.

Die Aufgabe wird durch die im Patentanspruch 1 angegebene Kombinationswaage gelöst.

Die Kombinationswaage gewährleistet eine zuverlässige spielfreie Verbindung von Vibrationsrinne mit Vibrationsmotor.

Weiterbildungen der Erfindung sind in den Unteransprüchen angegeben.

Es folgt die Beschreibung eines Ausführungsbeispiels anhand der Figuren. Von den Figuren zeigen
- Fig. 1: eine Kombinationswaage;
- Fig. 2: eine perspektivische Darstellung der Verbindungseinrichtung nach der Erfindung;
- Fig. 3: eine teilweise Querschnittsansicht der Verbindungseinrichtung;
- Fig. 4: eine Draufsicht auf einen Teil der Verbindungsvorrichtung mit dem Schieber in der ersten Position;
- Fig. 5: eine vergrößerte Querschnittsansicht entlang der Linie V-V in Fig. 4;
- Fig. 6: eine Draufsicht auf einen Teil der Verbindungsvorrichtung mit dem Schieber in der zweiten Position; und
- Fig. 7: eine vergrößerte Querschnittsansicht entlang der Linie VII-VII in Fig. 6.

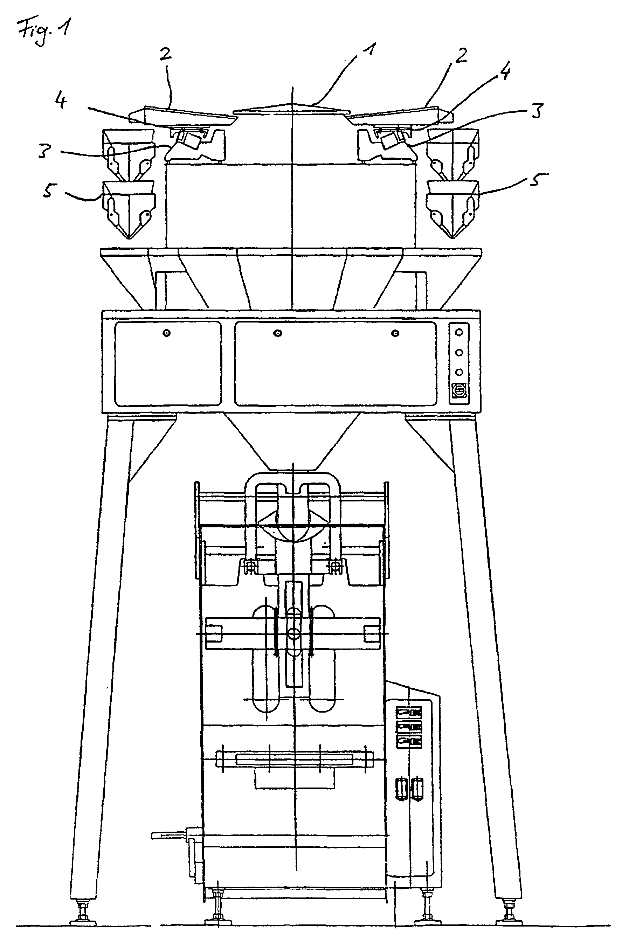

Wie in Fig. 1 gezeigt ist, weist die Kombinationswaage eine Verteilvorrichtung 1, Vibrationsrinnen 2, Antriebseinrichtungen 3, Verbindungseinrichtungen 4 und Wägebehälter 5 auf. Eine Verbindungseinrichtung 4 verbindet jeweils eine Vibrationsrinne 2 mit einer Antriebseinrichtung 3.

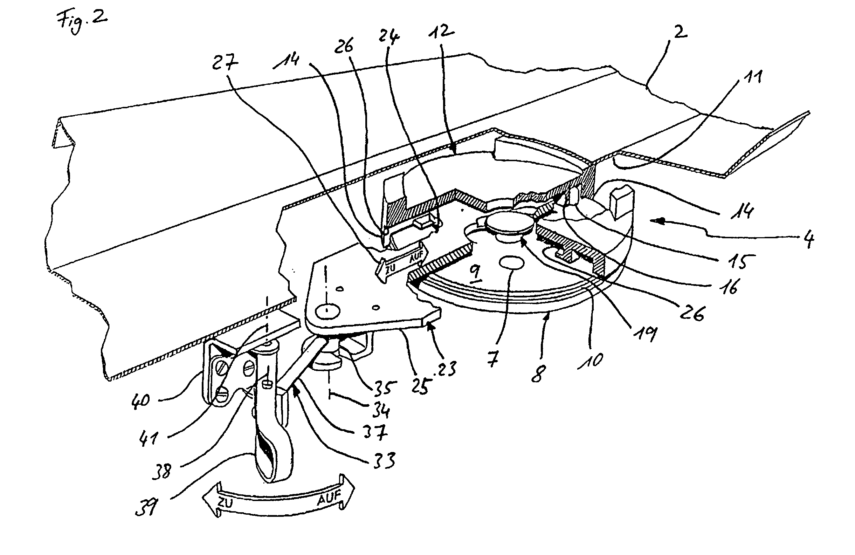

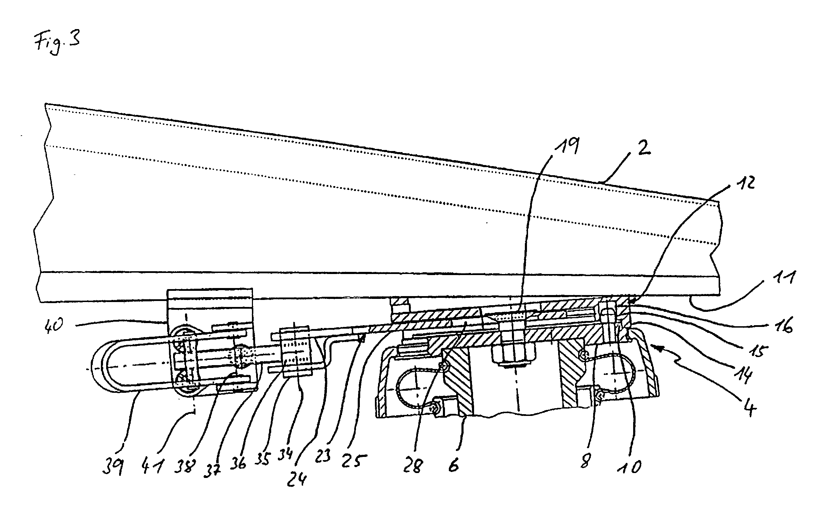

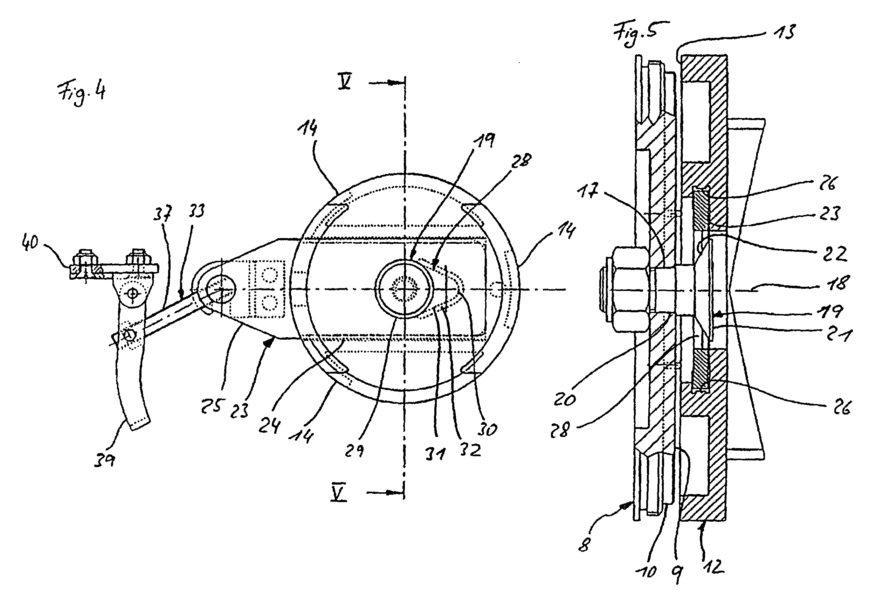

Wie insbesondere aus Fig. 2 und 3 ersichtlich ist, weist die Verbindungseinrichtung 4 ein zylindrisches Zwischenstück 6 auf, dessen eines Ende mit der Antriebseinrichtung 3 verbunden ist. Das andere Ende des zylindrischen Zwischenstücks 6 ist über Schrauben 7 mit einem Unterteil 8 verbunden. Das scheibenförmig ausgebildete Unterteil 8 weist eine von dem Zwischenstück 6 wegweisende Oberseite 9 auf. An dem äußeren Umfang der Oberseite 9 ist ein stufenförmiger Absatz 10 vorgesehen. Weiter weist die Verbindungseinrichtung 4 ein mit der unteren Seite 11 der Vibrationsrinne 2 verbundenes Gegenstück 12 mit einer von der Vibrationsrinne 2 wegweisenden Unterseite 13 auf. Wie am besten aus Fig. 2 und 4 ersichtliche ist, sind an der Unterseite 13 drei senkrecht zur Scheibenebene ausgerichtete und in Richtung zum Unterteil 8 hervorstehende Ansätze 14 vorgesehen. Die Ansätze 14 sind als Segmente einer Zylinderwand ausgebildet und in Umfangsrichtung um 120° versetzt angeordnet, wobei der Innendurchmesser der Segmente so groß ist, daß sie gerade das Unterteil 8 im Bereich des Absatzes 10 umfassen. Damit sind das Gegenstück 12 und das Unterteil 8 gegen ein Verschieben in der Plattenebene des Unterteiles 8 relativ zueinander fixiert.

Das Unterteil 8 trägt einen senkrecht zur Oberseite 9 hervorstehenden Führungsbolzen 15. In der Unterseite 13 des Gegenstückes 12 ist eine Bohrung 16 zur Aufnahme des Führungsbolzens 15 vorgesehen. Der Durchmesser der Bohrung 16 ist so gewählt, daß der Führungsbolzen 15 gerade noch herausnehmbar eingeführt werden kann, ohne zu verklemmen. Durch den Führungsbolzen 15 und den Absatz 10 und die Ansätze 14 ist die Winkelposition der Vibrationsrinne 2 relativ zur Verteilvorrichtung 1 und dem Wägebehälter 5 so festgelegt, daß die Zuführung der Produkte von der Verteilvorrichtung 1 zu dem Wägebehälter 5 optimal erfolgt.

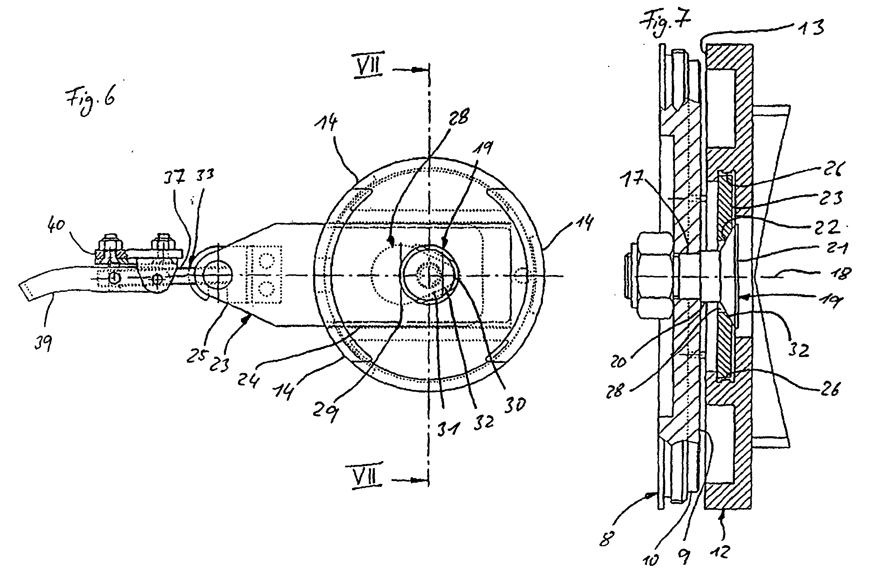

Wie Fig. 5 und 7 gezeigt ist, ist in der Mitte des Unterteils 8 eine Durchgangsbohrung 17 mit einer Bohrachse 18 vorgesehen. In der Durchgangsbohrung 17 ist ein Haltebolzen 19 angeordnet. Der Haltebolzen 19 weist einen Schaft 20 mit einem Kopf 21 auf. Ein Teil des Schaftes 20 und der Kopf 21 ragen auf der Seite der Oberseite 9 des Unterteiles 8 heraus. Der Kopf 21 des Haltebolzens 19 ist pilzförmige bzw. als Senkkopf ausgebildet. Eine zu dem Unterteil 8 weisende erste Kontaktfläche 22 des Kopfes 21 ist derart schräg zu der Oberseite 9 angeordnet, daß der Abstand zwischen der Oberseite 9 und der ersten Kontaktfläche 22 von der Bohrachse 18 radial nach außen größer wird.

Wie in Fig. 2 und 4 gezeigt ist, weist die Verbindungseinrichtung 4 einen Schieber 23 mit einem ersten Schieberabschnitt 24 auf, der in der Draufsicht gesehen rechteckig ausgebildet ist und der eine konstante Dicke aufweist. An den ersten Schieberabschnitt 24 schließt sich ein zweiter Schieberabschnitt 25 an. In der Unterseite 13 des Gegenstückes 12 ist eine Führung aus zwei sich gegenüberliegenden Nuten 26 vorgesehen. Die Nuten 26 erstrecken sich im wesentlichen parallel zueinander und zu der Unterseite 13. Der Abstand der Nuten 26 voneinander ist etwas größer als die Breite des darin geführten ersten Schieberabschnittes 24 gewählt. Der Schieber 23 wird in den Nuten 26 geführt und ist entlang der durch den Doppelpfeil 27 in Fig. 2 gezeigten ersten und zweiten Verschieberichtung von einer ersten Position in eine zweite Position und umgekehrt verschiebbar. Die Länge der Nuten 26 ist so gewählt, daß der zweite Schieberabschnitt 25 aus dem Gegenstück 12 heraussteht.

In dem ersten Schieberabschnitt 24 ist ein Langloch 28 vorgesehen, dessen Längsachse mit der in Verschieberichtung ausgerichteten Mittenachse des Schiebers 23 zusammenfällt. Das Langloch 28 weist eine erste Endbohrung 29 und eine in einem Abstand in Richtung der zweiten Verschieberichtung angeordnete zweite Endbohrung 30 auf. Der Durchmesser der ersten Endbohrung 29 ist größer als der Kopf 21 des Haltebolzens 19 gewählt, so daß der Kopf 21 durch die erste Endbohrung 29 hindurchführbar ist. Der Durchmesser der zweiten Endbohrung 30 entspricht dem des sich an den Kopf 21 anschließenden Schaftes 20 bzw. ist unwesentlich größer als dieser. Die beiden Endbohrungen 29, 30 sind durch einen sich verjüngenden Verbindungsabschnitt 31 verbunden, wie dies am besten in Fig. 4 bzw. Fig. 6 gezeigt ist. Auf der zur Vibrationsrinne 1 weisenden Seite des Schiebers 23 weist der Rand des Verbindungsabschnittes 31 und der zweiten Endbohrung 30 eine abgeschrägte zweite Kontaktfläche 32 auf. Die zweite Kontaktfläche 32 weist zu dem Langloch 28 nach innen. Die Schräge der zweiten Kontaktfläche 32 ist bezüglich ihrer Neigung entsprechend der ersten Kontaktfläche 22 gewählt, so daß sie mit der ersten Kontaktfläche 22 flächig in Kontakt gebracht werden kann. Die erste Endbohrung 29 liegt auf der Seite des zweiten Schieberabschnittes 25, während die zweite Endbohrung auf der diesem abgewandten Seite liegt.

Die Verbindungseinrichtung 4 weist weiter ein Spannelement 33 auf, das mit dem zweiten Schieberabschnitt 25 verbunden ist. Das Spannelement 33 weist einen Lagerbolzen 35 auf, der mit dem freien Ende des zweiten Schieberabschnittes 25 um eine erste Achse 34, die sich senkrecht zu der Unterseite 13 erstreckt, drehbar verbunden ist. Der Lagerbolzen 35 weist eine Gewindebohrung 36 auf, die sich parallel zu der Unterseite 13 erstreckt. In der Gewindebohrung 36 ist eine Stange 37 mit ihrem einen Ende mit einem Gewindeabschnitt eingeschraubt. Das andere Ende der Stange 37 ist um eine zweite Achse 38, die sich parallel zur ersten Achse 34 erstreckt, mit einem Spannhebel 39 schwenkbar verbunden. Der Spannhebel 39 ist mit einem an der Vibrationsrinne 2 befestigtem Widerlager 40 um eine dritte Achse 41, die sich parallel zu der zweiten Achse 38 erstreckt, schwenkbar verbunden.

Im Betrieb wird die Vibrationsrinne 2 mit dem Gegenstück 12, dem Schieber 23 und dem Spannelement 33 auf das Zwischenstück 6 mit dem Unterteil 8 aufgesetzt. Dazu wird der Schieber 23 in seine in Fig. 4 gezeigte erste Position gebracht. Beim Aufsetzen greift der Führungsbolzen 15 in die Bohrung 16, der Kopf 21 des Haltebolzens 19 ragt in die erste Endbohrung 29 des Langloches 28 hinein und der Absatz 10 ist mit den Ansätzen 14 in Eingriff. Dadurch ist die Position der Vibrationsrinne 2 eindeutig bestimmt. Nun wird der Spannhebel 39 aus der in Fig. 2 gezeigten offenen Stellung in die Spannstellung umgelegt, und der Schieber 23 wird dann von der in Fig. 4 gezeigten ersten Position nach links in die in Fig. 6 gezeigte zweite Position verschoben. Dabei wird die erste Kontaktfläche 22 des Kopfes 21 gegen die zweite Kontaktfläche 32 gedrückt, und damit wird das Gegenstück 12 mit der Vibrationsrinne 2 gegen das Unterteil 8 des Zwischenstückes 6 gepreßt. Durch den umgelegten Spannhebel 39 ist der Schieber 23 in der zweiten Position arretiert.

Die Anpreßkraft kann über die wirksame Länge des Spannelements 33 eingestellt werden. Dazu wird die Lage der Stange 37 relativ zu dem Lagerbolzen 35 durch Drehen geändert.

## Patentansprüche

1. Kombinationswaage mit Wägebehältern (5), mit
einer Verteilvorrichtung (1) zum Verteilen von zuzuführenden Produkten,
einer Zuführeinrichtung (2) zum Zuführen der Produkte von der Verteilvorrichtung (1) zu jeweils einem Wägebehälter (5),
einer Antriebseinrichtung (3) zum Inschwingungversetzen der Zuführeinrichtung (2) und
einer Verbindungseinrichtung (4) zum lösbaren Verbinden von Zuführeinrichtung (2) und Antriebseinrichtung (3), mit einem ersten Verbindungsteil (12) und einem zweiten Verbindungsteil (8),
einem Schieber (23), der mit dem ersten Verbindungsteil (12) verschiebbar verbunden ist, wobei eines der Verbindungsteile (8, 12) mit der Zuführeinrichtung (2) und das andere Verbindungsteil (12, 8) mit der Antriebseinrichtung (3) verbunden ist,
einem Spannelement (33), das mit dem Schieber (23) verbunden ist, zum Verschieben des Schiebers (23) entlang einer Verschieberichtung von einer ersten Position zu einer zweiten Position, in der der Schieber (23) gegen Verschieben in die erste Position arretierbar ist,
einem Haltebolzen (19) mit einem Schaft (20) und einem mit dem Schaft (20) verbundenen Kopf (21),
einem sich im wesentlichen parallel zur Verschieberichtung erstreckenden Langloch (28) mit einem ersten Abschnitt (29), der größer als der Kopf (21) ist, und einen daran anschließenden zweiten Abschnitt (30, 31), der kleiner als der Kopf (21) ist, wobei der Schieber (23) und das zweite Verbindungsteil (8) zwei Verbindungselemente bilden und wobei der Schaft (20) mit einem von den Verbindungselementen verbunden ist und das Langloch (28) in dem anderen der Verbindungselemente vorgesehen ist.

2. Kombinationswaage nach Anspruch 1, **dadurch gekennzeichnet, daß**
das Langloch (28) in dem Schieber (23) vorgesehen ist und daß der Schaft (20) mit dem zweiten Verbindungsteil (8) verbunden ist.

3. Kombinationswaage nach Anspruch 2, **dadurch gekennzeichnet, daß**
der erste Abschnitt (29) des Langloches (28) in Verschieberichtung zum Arretieren vor dem zweiten Abschnitt (30, 31) angeordnet ist.

4. Kombinationswaage nach Anspruch 1, **dadurch gekennzeichnet, daß**
das Langloch (28) in dem zweiten Verbindungsteil (8) vorgesehen ist und daß der Schaft (20) mit dem Schieber (23) verbunden ist.

5. Kombinationswaage nach Anspruch 4, **dadurch gekennzeichnet, daß**
der zweite Abschnitt (30, 31) des Langloches (28) in Verschieberichtung zum Arretieren vor dem ersten Abschnitt (29) angeordnet ist.

6. Kombinationswaage nach einem der Ansprüche 1 bis 5, **dadurch gekennzeichnet, daß**
das erste Verbindungsteil (12) mit der Zuführeinrichtung (2) verbunden ist.

7. Kombinationswaage nach einem der Ansprüche 1 bis 6, **dadurch gekennzeichnet, daß**
das Spannelement (33) mit der Zuführeinrichtung (2) verbunden ist.

8. Kombinationswaage nach einem der Ansprüche 1 bis 7, **dadurch gekennzeichnet, daß**
der Kopf (21) als Senkkopf mit einer ersten Kontaktfläche (22) ausgebildet ist und
der Rand des zweiten Abschnittes (30, 31) eine abgeschrägte zweite Kontakfläche (32) aufweist, die bezüglich ihrer Neigung entsprechend zu der ersten Kontaktfläche gewählt ist.

9. Kombinationswaage nach einem der Ansprüche 1 bis 8, **dadurch gekennzeichnet,**
**daß** ein Führungsbolzen (15) mit einem der Verbindungsteile (8) verbunden ist und
**daß** das andere Verbindungsteil (12) eine Bohrung (16) zur Aufnahme des Führungsbolzens (15) aufweist.

10. Kombinationswaage nach einem der Ansprüche 1 bis 9, **dadurch gekennzeichnet,**
**daß** eines der Verbindungsteile (8) an seinem äußern Umfang einen Absatz (10) aufweist und
**daß** das andere Verbindungsteil einen Ansatz (14) aufweist, der so angeordnet ist, daß er den Absatz (10) umfaßt.

11. Kombinationswaage nach einem der Ansprüche 1 bis 10, **dadurch gekennzeichnet,**
**daß** die zweite Position des Schiebers (23) entlang der Verschieberichtung durch das Spannelement (33) einstellbar ist.

## Claims

1. Combination weighing scales with weighing receptacles (5), with
a distributing device (1) for distributing products to be distributed thereto,
a conducting device (2) for conducting the products from the distributing device (1) to a weighing receptacle (5) in each case,
a drive (3) for setting the conducting device (2) in oscillation, and
a connecting device (4) for the releasable connection of conducting device (2) and drive (3), with a first connecting part (12) and a second connecting part (8),
a slider (23), which is displaceably connected to the first connecting part (12), one of the connecting parts (8, 12) being connected to the conducting device (2), and the other connecting part (12, 8) being connected to the drive (3),
a tensioning member (33), which is connected to the slider (23), for displacing the slider (23) along a displacement direction from a first position to a second position in which the slider (23) is arrestable against displacement into the first position,
a retaining bolt (19) with a shaft (20) and a head (21) connected to the shaft (20),
an elongated hole (28) extending substantially parallel to the displacement direction, with a first portion (29) which is larger than the head (21) and an adjoining second portion (30, 31), which is smaller than the head (21), the slider (23) and the second connecting part (8) forming two connecting members, and the shaft (20) being connected to one of the connecting members, and the elongated hole (28) being provided in the other of the connecting members.

2. Combination weighing scales according to Claim 1, **characterised in that**
the elongated hole (28) is provided in the slider (23), and the shaft (20) is connected to the second connecting part (8).

3. Combination weighing scales according to Claim 2, **characterised in that**
in the displacement direction, the first portion (29) of the elongated hole (28) is positioned in front of the second portion (30, 31) for arrestation purposes.

4. Combination weighing scales according to Claim 1, **characterised in that**
the elongated hole (28) is provided in the second connecting part (8), and the shaft (20) is connected to the slider (23).

5. Combination weighing scales according to Claim 4, **characterised in that**
in the displacement direction the second portion (30, 31) of the elongated hole (28) is positioned in front of the first portion (29) for arrestation purposes.

6. Combination weighing scales according to Claims 1 to 5, **characterised in that**
the first connecting part (12) is connected to the conducting device (2).

7. Combination weighing scales according to Claims 1 to 6, **characterised in that**
the tensioning member (33) is connected to the conducting device (2).

8. Combination weighing scales according to Claims 1 to 7, **characterised in that**
the head (21) is in the form of a countersunk head with a first contact surface (22), and
the margin of the second portion (30, 31) has a bevelled second contact surface (32), the gradient of which is selected in correspondence with the first contact surface.

9. Combination weighing scales according to Claims 1 to 8, **characterised in that**
a guide pin (15) is connected to one of the connecting parts (8), and
the other connecting part (12) has a bore (16) for accommodating the guide pin (15).

10. Combination weighing scales according to Claims 1 to 9, **characterised in that**
one of the connecting parts (8) has a shoulder (10) on its outer circumference, and
the other connecting part has a catch (14) positioned in such a way that it encloses the shoulder (10).

11. Combination weighing scales according to one of Claims 1 to 10, **characterised in that** the second position of the slider (23) is adjustable along the displacement direction by the tensioning member (33).

## Revendications

1. Balance combinée avec des récipients de pesage (5), avec
un dispositif distributeur (1) pour la distribution de produits à transporter,
un dispositif de transport (2) pour le transport des produits du dispositif distributeur (1) à un récipient de pesage (5) respectif,
un dispositif d'entraînement (3) imprimant des vibrations au dispositif de transport (2) et
un dispositif d'assemblage (4) pour l'assemblage amovible du dispositif de transport (2) et du dispositif d'entraînement (3),
avec une première partie d'assemblage (12) et une deuxième partie d'assemblage (8),
une coulisse (23) reliée de manière mobile à la première partie d'assemblage (12), l'une des parties d'assemblage (8, 12) étant reliée au dispositif de transport (2) et l'autre partie d'assemblage (12, 8) au dispositif d'entraînement (3),
avec un élément de serrage (33) qui est relié à la coulisse (23) pour la translation de la coulisse (23) le long d'un sens de translation entre une première position et une deuxième position dans laquelle la coulisse (23) peut être bloquée pour empêcher son déplacement dans la première position,
avec un goujon de maintien (19) comportant un corps (20) et une tête (21) reliée à ce corps (20),
avec un'trou allongé (28) s'étendant parallèlement au sens de translation et possédant une première partie (29) plus grande que la tête (21) et une deuxième partie (30, 31) faisant suite à celle-ci et plus petite que la tête (21),
dans lequel la coulisse (23) et la deuxième partie d'assemblage (8) forment deux éléments d'assemblage, et dans lequel la tige (20) est reliée avec l'un des éléments d'assemblage et le trou allongé (28) ménagé dans l'autre élément d'assemblage.

2. Balance combinée selon la revendication 1, **caractérisée en ce que** le trou allongé (28) est prévu dans la coulisse (23) et **en ce que** le corps (20) est relié à la deuxième partie d'assemblage (8).

3. Balance combinée selon la revendication 2, **caractérisée en ce que** la première partie (29) du trou allongé (28) est disposée dans le sens de translation en vue d'un arrêt avant la deuxième partie (30, 31).

4. Balance combinée selon la revendication 1, **caractérisée en ce que** le trou allongé (28) est prévu dans la deuxième partie d'assemblage (8) et **en ce que** le corps (20) est relié à la coulisse (23).

5. Balance combinée selon la revendication 4, **caractérisée en ce que** la deuxième partie (30, 31) du trou allongé (28) est disposée dans le sens de translation en vue d'un arrêt avant la première partie (29).

6. Balance combinée selon l'une ou l'ensemble des revendications 1 à 5, **caractérisée en ce que** la première partie d'assemblage (12) est reliée au dispositif de transport (2).

7. Balance combinée selon l'une ou l'ensemble des revendications 1 à 6, **caractérisée en ce que** l'élément de serrage (33) est relié au dispositif de transport (2).

8. Balance combinée selon l'une ou l'ensemble des revendications 1 à 7, **caractérisée en ce que** la tête (21) est conformée comme une tête fraisée avec une première surface de contact (22), et le bord de la deuxième partie (30, 31) présente une deuxième surface de contact (32) biseautée dont l'inclinaison est choisie de façon à correspondre à la première surface de contact.

9. Balance combinée selon l'une ou l'ensemble des revendications 1 à 8, **caractérisée en ce qu'**un goujon de guidage (15) est relié à l'une des parties d'assemblage (8) et **en ce que** l'autre partie d'assemblage (12) présente un alésage (16) destiné à recevoir le goujon de guidage (15).

10. Balance combinée selon l'une ou l'ensemble des revendications 1 à 9, **caractérisée en ce que** l'une des parties d'assemblage (8) présente un décrochement (10) sur sa circonférence extérieure et **en ce que** l'autre partie d'assemblage présente une saillie (14) disposée de telle sorte qu'elle entoure le décrochement (10).

11. Balance combinée selon l'une ou l'ensemble des revendications 1 à 10, **caractérisée en ce que** la deuxième position de la coulisse (23) dans le sens de translation peut être réglée à l'aide de l'élément de serrage (33).
